Europäisches Patentamt

European Patent Office

Office européen des brevets

(11) Publication number: **0 220 421**
**A2**

# (12) EUROPEAN PATENT APPLICATION

(21) Application number: 86111909.7

(51) Int. Cl.⁴: **B23P 25/00**

(22) Date of filing: 28.08.86

(30) Priority: 30.08.85 JP 189645/85

(43) Date of publication of application:
06.05.87 Bulletin 87/19

(84) Designated Contracting States:
CH DE GB LI

(71) Applicant: **HITACHI, LTD.**
**6, Kanda Surugadai 4-chome Chiyoda-ku**
**Tokyo 100(JP)**

(72) Inventor: **Miura, Yoshio**
**17-6, Hanayamacho-1-chome**
**Hitachi-shi(JP)**
Inventor: **Saito, Hiroshi**
**11-11, Nishinarusawacho-4-chome**
**Hitachi-shi(JP)**
Inventor: **Ota, Katuro**
**2-8-301, Ayukawacho-3-chome**
**Hitachi-shi(JP)**

(74) Representative: **Strehl, Schübel-Hopf,**
**Groening, Schulz**
**Widenmayerstrasse 17 Postfach 22 03 45**
**D-8000 München 22(DE)**

(54) Chip breaking method.

(57) A method of breaking chips formed during machining of a work by a cutting tool. A beam is irradiated to a portion of a surface to be machined of the work, to form a quality-changed layer in the surface. Chips formed during the machining of the surface by means of the cutting tool are broken at the quality-changed layer thereby effectively preventing the chips from twining themselves around the cutting tool.

X-AXIS

# FIG. 3

## CHIP BREAKING METHOD

### BACKGROUND OF THE INVENTION

The present invention relates to a method of breaking chips using a beam such as, for example, laser beam, electron beam or the like.

A so-called chip breaker system is popular as a method of breaking chips, in which a chip is involved into a curled form by a cutting tool, to break the chip. With such chip breaker system, however, it is impossible to break chips formed during the finish machining in which a depth of cut is 0.05 -0.2 mm, and the chips tend to twine themselves round the cutting tool. There have been developed a pregrooving cutting method and a vibration cutting method as a method of breaking chips formed during the finish machining, the pregrooving cutting method being such that a work to be machined is preliminarily formed with grooves in the surface thereof, and the vibration cutting method being such that a work is subjected to vibration during machining. These methods have, however, such a problem that scars remain in the finished surface of the work.

A publication entitled "Chip Treating Technology" issued on October 30, 1982 by Kabushiki Kaisha Sogo Gijutsu Center has proposed, as a method of breaking chips, techniques such as an addition of elements having brittle property to a work to be machined, an increase in carbon content in the work, a reduction in cutting speed, an increase in feed, a reduction in rake angle of a cutting tool, a reduction in side cutting angle of the cutting tool, a reduction in radius of nose of the cutting tool and an improvement in configuration of a chip breaker. Japanese Patent Application Laid-Open No. 53-95388 discloses an improvement in configuration of a chip breaker. However, these methods require a lot of experimental man-hours and an accumulation of a great amount of know-how. Further, the above-described methods are appreciated to be effective for chips formed in the rough machining in which the depth of cut is 0.3 mm or more, it is impossible to break chips formed in the finish machining of the depth of cut of 0.2 mm or less, because the chips formed during the finish machining are fine and thin. Thus, the chips which are not broken twine themselves round the cutting tool thereby making it substantially impossible to carry out an unattended machining operation of mild steels or the like. The fact is that the machining lines of the Flexible Manufacturing System and the Factory Automation which are broadly brought into practice at present are merely intended for cast products which have no problem of twining of chips.

Japanese Patent Application Laid-Open No. 59-85393 discloses a cutting apparatus for works which are hard to be machined, wherein a laser beam is irradiated to the work to heat the same and the work is machined by a cutting tool immediately after the heating.

### OBJECT AND SUMMARY OF THE INVENTION

An object of the present invention is to provide a method of breaking chips, which is capable of effectively breaking chips formed in the machining of a work by a cutting tool.

According to the present invention, there is provided a method of breaking chips, comprising the steps of:

preparing a work having a surface to be machined;

irradiating a beam to the work to heat a portion of the surface to be machined, to thereby form in the surface a quality-changed layer different in composition from the adjacent portions of the surface; and

machining the surface by a cutting tool to permit chips formed by the machining to be broken at the quality-changed layer.

### BRIEF DESCRIPTION OF THE DRAWINGS

Fig. I is a schematic front elevational view showing a lathe to which is applied an embodiment of a method according to the present invention;

Fig. 2 is a plan view of the lathe shown in Fig. I;

Fig. 3 is a cross-sectional view taken along the line III -III in Fig. I;

Fig. 4 is a schematic perspective view showing principal portions of Fig. I, with a laser beam forming a quality-changed layer in a surface to be machined of a work;

Fig. 5 is a schematic perspective view showing chips formed in the machining of the work shown in Fig. 4, by a cutting tool;

Fig. 6 is a schematic front elevational view showing a second embodiment of the present invention, in which a quality-changed layer extends helically;

Fig. 7 is a fragmentary schematic perspective view showing a third embodiment of the present invention, in which a nozzle is provided for successively applying cooling fluid to portions of a surface to be machined which has been heated by a laser beam, to cool the surface portions;

Fig. 8 is a fragmentary schematic cross-sectional view showing a fourth embodiment of the present invention, in which an air jet is used to blow off a cutting oil layer on a surface to be machined of a work;

Fig. 9 is a fragmentary schematic cross-sectional view showing a fifth embodiment of the present invention, in which a material having the property tending to absorb laser beam is successively deposited on portions of a surface to be machined to which portions the laser beam is to be irradiated;

Fig. 10 is a cross-sectional view taken along the line X -X in Fig. 9;

Fig. 11 is a fragmentary schematic cross-sectional view showing a sixth embodiment of the invention, in which an air flow is used to successively preheat portions of a surface to be machined to which portions the laser beam is to be irradiated;

Fig. 12 is a cross-sectional view taken along the line XII -XII in Fig. 11;

Fig. 13 is a schematic perspective view showing a seventh embodiment wherein the method according to the present invention is applied to a turning center;

Fig. 14 is a plan view showing an eighth embodiment of the present invention, in which a quality-changed layer extends spirally;

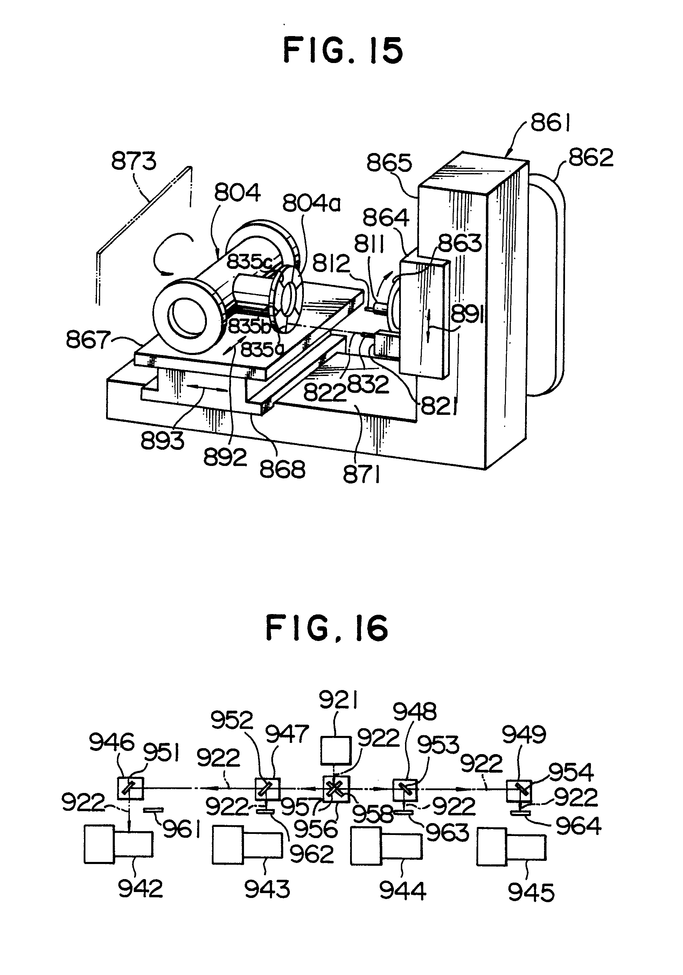

Fig. 15 is a schematic perspective view showing a ninth embodiment wherein the method according to the present invention is applied to a machining center having a face plate; and

Fig. 16 is a schematic block diagram showing a tenth embodiment wherein the method according to the present invention is applied to a plurality of cutting apparatuses.

## DETAILED DESCRIPTION

Embodiments of the present invention will now be described below with reference to the accompanying drawings through which like reference numerals are used to designate like or similar parts or components.

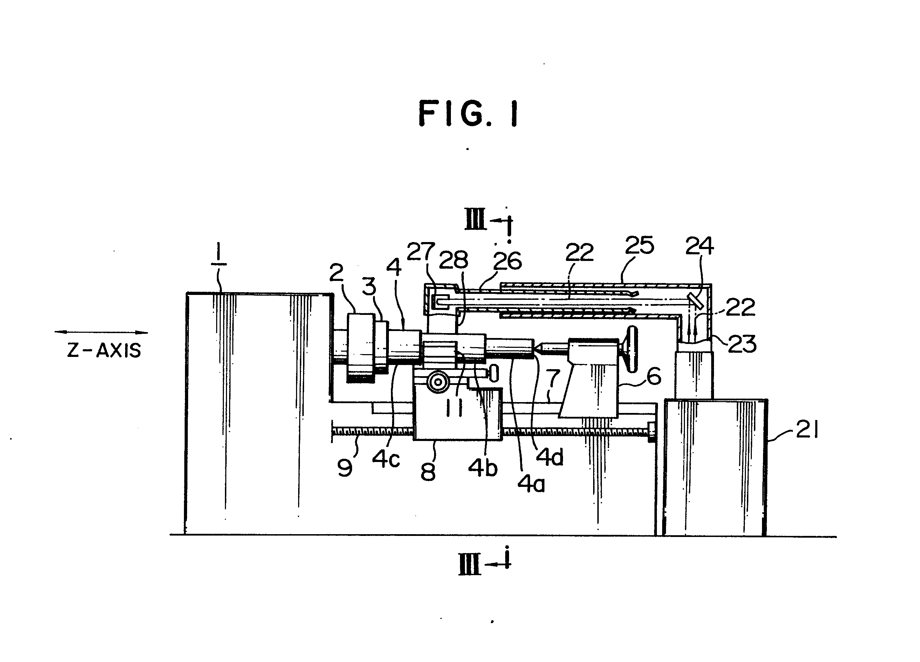

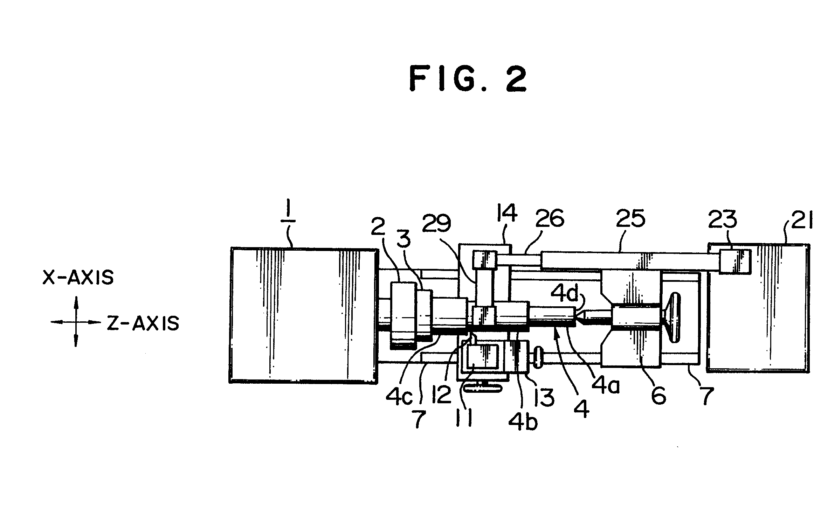

Referring to Figs. 1 through 3, a lathe to which a method according to the present invention is applied has a body 1 on which a face plate 2 is rotatably supported. The face plate 2 has a chuck 3 for gripping a work 4 such as a rod of a circular cross-section having stepped cylindrical surfaces to be machined 4a, 4b and 4c. The work 4 is formed of a ferrous metal, aluminum, copper, titanium, ceramic or the like. The center of the end face 4d of the work 4 on the side opposite to the chuck 3 is supported by a tail stock 6 which is slidable on a guide surface 7 of the body 1. An apron 8 is slidable on the guide surface 7 in a direction along the axis of the work 4, i.e., along the Z-axis by means of a feed screw 9. A holder 11 for supporting a cutting tool 12 is mounted on a table 13 which can incrementally move the cutting tool 12 along the Z-axis. The table 13 is movably mounted on the apron 8 through a base 14 so as to be capable of moving the cutting tool 12 along the Z-axis.

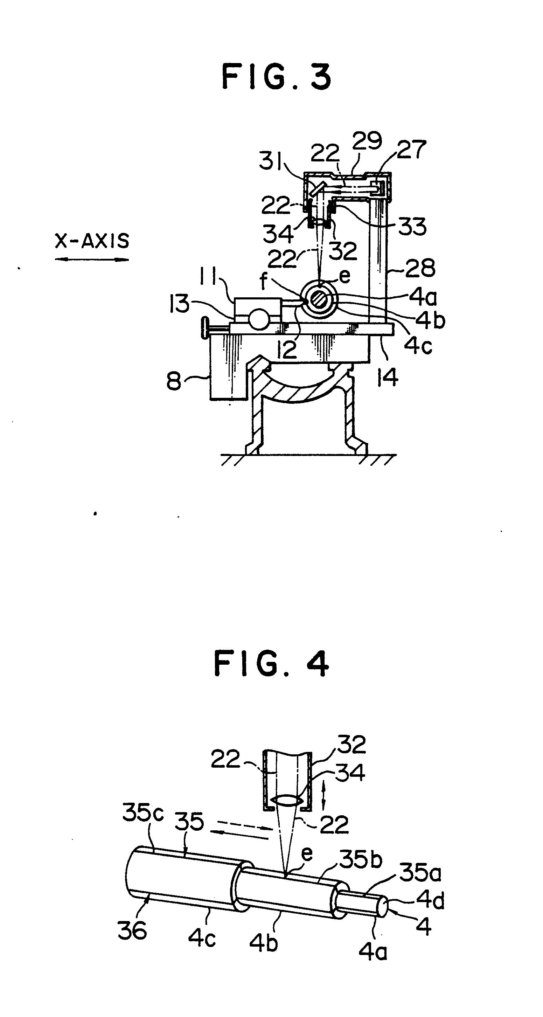

As shown in Fig. 1 a laser oscillator 21 is located on the floor in side by side relation to the lathe body 1. The laser oscillator 21 may be of any one of $CO_2$ laser, Young laser, Helium-Neon laser, Argon laser, semiconductor laser and the like. The laser beam 22 from the laser oscillator 21 is guided by a vertical tubular laser guide 23 secured to a housing of the laser oscillator 21 while being protected by the guide 23, and is reflected by a reflecting mirror 24. The laser beam 22 from the reflecting mirror 24 is guided by a longitudinally extending, horizontal tubular laser guide 25 and a longitudinally extending, horizontal tubular laser guide 26 telescopically fitted in the tubular guide 25 while being protected by the guides 25 and 26, and is reflected by a reflecting mirror 27. The tubular laser guide 26 is supported by a vertical supporting post 28 secured to the base 14. As shown in Fig. 3, the laser beam 22 reflected by the reflecting mirror 27 is guided and protected by a laterally extending, horizontal tubular guide 29 supported by the post 28, and is reflected by a reflecting mirror 31. The laser beam 22 from the reflecting mirror 31 is protected and guided by a vertical tubular laser guide 32 telescopically fitted in a vertically downwardly extending, tubular extension 33 of the guide 29 and is condensed by a lens 34 to focus onto the surfaces to be machined 4a, 4b and 4c of the work 4, or onto a point e on the surface 4b, for example, as shown in Figs. 1 through 3. The point e on the surface 4b is offset by about 90° in the clockwise direction from a point of contact f of the cutting tool 12 with the surface 4b as viewed in Fig. 3.

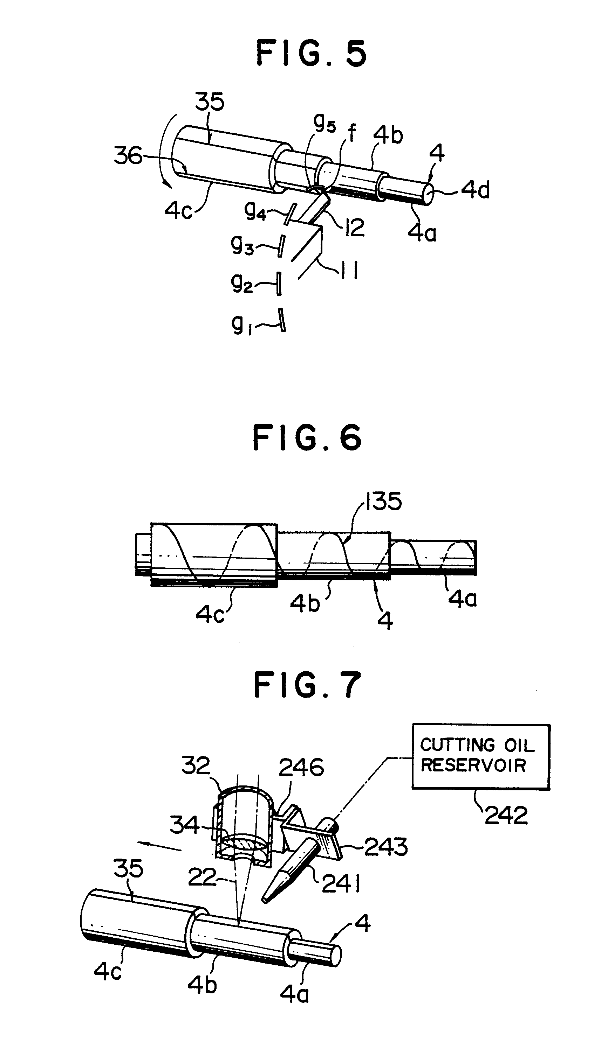

A method of breaking chips according to a first embodiment of the present invention will be described below with reference to Figs. 1 through 5, particularly to Figs. 4 and 5.

The work 4 is first supported by and between the chuck 3 and the tail stock 6 of the lathe. After completion of the rough machining of the cylindrical surfaces 4a, 4b and 4c of the work 4, the apron 8 is moved along the Z-axis to locate the lens 34 at an initial position just above the end face 4d of the work 4. Then, the laser oscillator 21 is

actuated to generate the laser beam 22 to allow the same to be irradiated to a point on the cylindrical surface 4a of the work 4 adjacent the end face 4d thereof. The apron 8 is moved along the Z-axis to the left as viewed in Fig. I, thereby moving the laser beam 22 relative to the work 4 from the end face 4d toward the other end of the work 4, to successively heat incremental portions of the surface 4a extending along the axis of the work 4. Since the portions of the surfaces of the work 4 which are heated by the laser beam 22 are very low in heat capacity, the heated portions are rapidly cooled successively by the adjacent portions of the work 4 and by the ambient air, with a result that a quality-changed layer portion different in composition from the adjacent portions of the work 4, i.e., a quenched and hardened layer portion 35a is formed as shown in Fig. 4. The thickness of the quality-changed layer portion 35a can be suitably determined depending upon the amount of energy of the laser beam 22 and the feeding rate thereof.

As the laser beam 22 reaches the step between the surfaces 4a and 4b, the laser guide 32 is moved relative to the extension 33 to focus the laser beam 22 onto a point on the surface 4b. The apron 8 is then moved along the Z-axis to the left as viewed in Fig. I, to thereby form a quality-changed layer portion 35b in the surface 4b. In the similar manner, a quality-changed layer portion 35c is formed on the surface 4c. Thus, a quality-changed layer 35 extending in parallel to the axis of the work 4 is formed in the surfaces to be machined of the work 4.

After formation of the quality-changed layer 35, the apron 8 is returned to the aforesaid initial position, and the work 4 is angularly moved around its axis by a predetermined angle and, then, another quality-changed layer 36 is formed in the surfaces 4a, 4b and 4c in the similar manner. Thus, a required number of circumferentially spaced quality-changed layers 35 and 36 are formed in the surfaces 4a, 4b and 4c.

After formation of the required number of quality-changed layers 35, 36, the work 4 is rotated as shown in Fig. 5 and the apron 8 is moved along the Z-axis, to successively finish-machine the surfaces 4a, 4b and 4c by the cutting tool I2. Relatively thin and fine chips formed during the finish machining by the cutting tool I2 are successively broken at the quality-changed layers 35, 36 thereby forming chip pieces $g_1$, $g_2$ ... $g_s$ each having a length determined by the distance between each pair of adjacent quality-changed layers.

As will been seen from the foregoing description, the relatively thin chips formed during the finish machining, even though chips are formed of mild steel, for example, are successively broken at the quality-changed layers 35, 36 having an increased mechanical strength and, therefore, it is possible to break the chips easily and efficiently. Further, since the length of the chip pieces is determined by the distance between the pair of adjacent quality-changed layers, the length can be shortened as desired. Thus, upon the post-treatment of the chips, i.e., when the chips are received in a box or bag, the chips would not protrude from and through the box or bag, and it is possible to easily and conveniently put the chips into the box or bag.

In case the diameter of the work 4 is small, it will be understood that it is sufficient if only one quality-changed layer 35 or 36 is formed on the work surface.

It is not necessarily required that the quality-changed layers 35 and 36 extend in parallel to the axis of the work 4. For example, as is the case with a second embodiment shown in Fig. 6, a quality-changed layer I35 may extend helically around the axis of the work 4 in the surfaces 4a, 4b and 4c thereof. The helically extending, quality-changed layer I35 can be formed by rotating the work 4 while moving the laser beam 22 along the Z-axis. What is important is that it is sufficient if the quality-changed layer intersects the path of movement of the cutting tool I2 relative to the work 4.

Fig. 7 shows a third embodiment of the present invention, which includes a nozzle 24I connected to a cutting oil reservoir 242. The nozzle 24I is fixedly attached to a bracket 243. The bracket 243 is pivotally mounted on a bracket 246 secured to the guide 32 by means of screws (not shown) in such a manner that the nozzle 24I is moved together with the guide 32. Immediately after the laser beam 22 heats successively portions of the surfaces 4a, 4b and 4c to be machined of the work 4, the cutting oil from the nozzle 24I is injected onto the heated portions to successively quench those heated portions thereby insuring the formation of the quality-changed layer 35. The third embodiment having the cooling step shown in Fig. 7 is particularly suitable for use with a work 4 made of a stainless steel. The reason for this is that it is possible to avoid occurrence of intercrystalline corrosion by virtue of the cooling of the heated portions with the cutting oil.

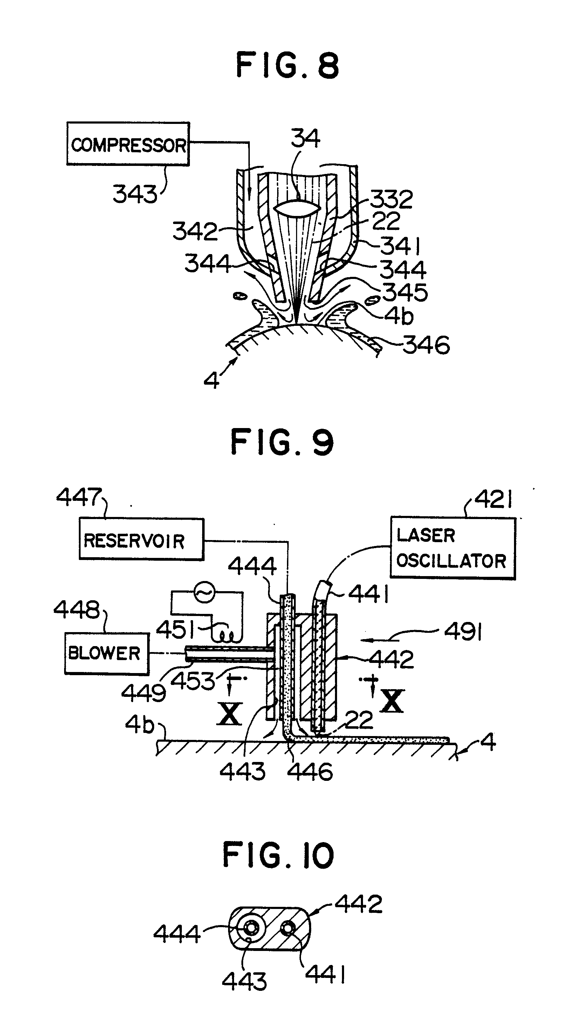

Fig. 8 shows a fourth embodiment of the present invention, which includes an outer tubular member 34I cooperating with a guide 332 corresponding to the guide 32 shown in Figs. I through 3, to define therebetween an annular passage 342. The passage 342 is connected to a compressor 343 and communicates with the inner space of the guide 332 through a plurality of orifices 344 formed in the wall of the guide 332. The orifices 344 are inclined so as to be directed toward an end opening 345 of the guide 332. The air jet from the end opening 345 successively impinges against the portions of the surfaces, for example, the surface 4b of the work 4 to be heated by the laser beam 22, to remove a cutting liquid layer 346 on the portions to be heated, thereby preventing the diffused reflection of the laser beam 22 which might otherwise be caused by the cutting liquid layer 346. Immediately after the removal of the cutting liquid layer 346 by the air jet, the portions to be heated of the surfaces of the work are successively heated by the laser beam 22.

Figs. 9 and 10 show a fifth embodiment of the present invention, which utilizes a Young laser oscillator 421 in place of the laser oscillator 21 shown in Figs. 1 through 3. The laser beam 22 from the Young laser oscillator 421 is led by an optical fiber bundle 441 so as to focus onto a point on the surfaces, for example, surface 4b of the work 4. The optical fiber bundle 441 is supported by a holder 442 mounted on the apron 8 for movement therewith as shown in Figs. 1 through 3. The holder 442 is provided with a bore 443 having a circular cross-section and having a bottom wall. A pipe 444 extends through the bottom wall of the bore 443. The pipe 444 has one end thereof connected to a reservoir 47 containing a mixture 446 in which carbon powder is dissolved in a thermosetting resin. The other end opening of the pipe 44 faces toward the surface 4b of the work 4 at a position immediately upstream of the laser beam 22 with reference to the direction of movement thereof indicated by the arrow 491 in Fig. 9. The pipe 444 cooperates with the wall surface of the bore 443 to define therebetween an annular space 453 connected to a blower 448 through a pipe 449. A heater element 451 serves to heat air flowing through the pipe 449.

The mixture 446 of the carbon powder and the thermosetting resin from the reservoir 447 is successively deposited through the pipe 444 onto the portions of the surface 4b of the work 4 to be heated by the laser beam 22. The air from the blower 448 is heated by the heater element 451. The heated air is blown from the annular space 443 against the surface 4b of the work 4, to harden or cure the thermosetting resin in the mixture 446 which is being deposited onto the portions to be heated of the surface 4b of the work 4. The laser beam 22 is irradiated to the deposited black mixture 446. Because of the black mixture 446, the laser beam 22 is efficiently absorbed in the mixture so that the portions to be heated of the surface 4b are successively heated to form the quality-changed layer 35 as shown in Fig. 4.

The embodiment shown in Figs. 9 and 10 may utilize black colored ink, or black colored toner used in an electrostatic reproducing machine in substitution for the mixture 446. What is important is that it is sufficient if a material which has the property tending to absorb the laser beam is deposited onto the portions to be heated of the surfaces of the work prior to the irradiation of the laser beam 2 to those portions.

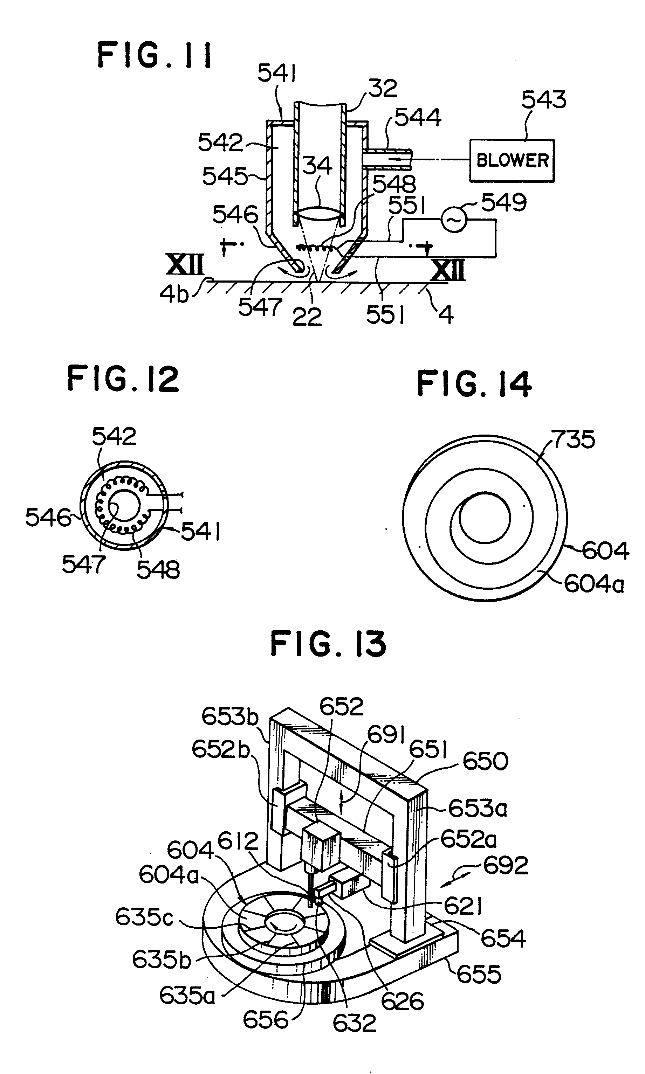

Figs. 11 and 12 show a sixth embodiment of the present invention, which includes a heating head 541 fixedly secured to the guide 32 so as to surround the tip thereof to define therebetween an annular space 542. The space 542 communicates with a blower 543 through a conduit 544. The head 541 has a cylindrical portion 545 in concentric relation to the guide 32 and a frustconical portion 546 projecting downwardly from the lower end of the cylindrical portion 545 to form a central opening 547 aligned with the guide 32. A heating element 548 extends in a substantially circular from so as to surround the laser beam 22 condensed by the lens 34. The heating element 548 is connected to an electric power source 549 by a pair of lead wires 551 extending through bores formed in the wall of the frustconical portion 546.

Air fed from the blower 543 to the space 542 through the conduit 544 is heated by the heating element 548. The heated air is blown successively against the portions of the surfaces, for example, surface 4b of the work 4 to be heated by the laser beam 22, to preheat the portions to be heated to a temperature of 80°C, for example. The laser beam 22 is successively irradiated to the preheated portions to form the quality-changed layer 35 as shown in Fig. 4. Since the portions of the work 4 to be heated by the laser beam 22 are preheated, these portions to be heated are efficiently heat-treated and are formed into the quality-changed layer. The preheating also makes it possible to remove water soluble cutting oil and the like adhering to the surfaces of the work 4.

Fig. 13 shows a seventh embodiment wherein the method according to the present invention is applied to a turning center. The turning center has a turning body 650 which comprises a lateral beam 651 supporting a control box 652 for controlling a cutting tool 612, a pair of vertical slider guides 652a and 652b supporting the beam 651, a pair of columns 653a and 653b along which a pair of slide guides 652a and 652b respectively slide in the direction indicated by the arrow 691, a pair of lateral slide guides 654 (only one shown) respectively supporting the columns 653a and 653b, and a base body 655 allowing the slide guides 654 to move toward and away from a turntable 656, i.e., in the direction indicated by the arrow 692.

A laser oscillator 621 corresponding to the laser oscillator 21 shown in Figs. 1 through 3 is fixedly mounted on the lateral beam 651. A guide 626 corresponding to the guide 26 shown in Figs. 1 through 3 is supported by a housing of the laser

oscillator 621 retractably in the direction perpendicular to the lateral beam 651, i.e., in the direction indicated by the arrow 692. A guide 632 corresponding to the guide 32 shown in Figs. l through 3 is telescopically fitted in the guide 626. The laser beam from the laser oscillator 621 passes through the guides 626 and 632 and a lens (not shown) incorporated in the guide 632 and is focused onto a point on the annular surface 604a of the work 604 to be machined on the turntable 656.

After completion of the rough machining of the surface 604a of the work 604, the laser beam is irradiated to the work 604 on the turntable 656. The cooperation of the rotation of the work 604 by the turntable 656 with the linear movement of the guide 621 as indicated by the arrow 692, allows a plurality of radially extending, quality-changed layers 635a, 635b ... to be formed on the surface 604a, similar to the quality-changed layer 35 described in connection with Fig. 4. After formation of the radial quality-changed layers 635a, 635b..., the surface 604a to be machined is finish-machined by means of a finishing cutting tool 6l2. Chips formed during the finish machining are broken at the quality-changed layers 635a, 635b ... in the same manner as described in connection with Fig. 5 thereby effectively preventing the chips from twining themselves around the cutting tool 6l2.

Although the seventh embodiment shown in Fig. l3 has been described as having the quality-changed layers 635a, 635b ... extending radially, a quality-changed layer 735 may extend in a spiral form on the surface 604a to be machined of the work 604 as is the case with an eighth embodiment shown in Fig. l4. What is important is that it is sufficient if the quality-changed layer extends in intersecting relationship to the path of movement of the cutting tool 6l2 with respect to the work 604.

It should be understood that each of the embodiments shown in Figs. 7 through l2 can be applied to the seventh embodiment shown in Fig. l3.

Fig. l5 shows a ninth embodiment wherein the method according to the present invention is applied to a machining center having a face plate. The machining center comprises a body 86l and an automatic tool interchanging device 862. The rotary face plate 863 is supported by a base 864 slidable along a column 865 of the body 86l in the direction indicated by the arrow 89l. A cutting tool 8l2 is supported by a holder 8ll mounted on the rotary face plate 863. A table 867 having mounted thereon a work 804 having an annular surface to be machined 804a is supported by a base 868 for rotation and for reciprocating motion in the direction indicated by the arrow 892. The base 868 is supported by the base body 87l for movement indicated by the arrow 893.

A laser oscillator 82l similar to the laser oscillator 2l shown in Figs. l through 3 is fixedly secured to the base 864. A guide 832 corresponding to the guide 32 shown in Figs. l through 3 is supported by a housing of the laser oscillator 82l so as to be retractable in the direction indicated by the arrow 893. A lens (not shown) similar to the lens 34 shown in Figs. l through 3 is incorporated in the guide 832. The laser beam 822 from the laser oscillator 82l passes through the guide 832 and the lens incorporated therein to focus on a point on the surface 804a of the work 804. In order to absorb the laser beam reflected from the work 804 or the laser beam which does not impinge against the work 804, the machining center is preferably surrounded by a well-known laser-beam absorbing plate 873. It is of course possible to arrange the laser-beam absorbing plate 873 around the lathe shown in Figs. l through 3 and the turning center shown in Fig. l3.

After completion of the rough machining of the surface 804a of the work 804, the laser beam 822 is irradiated to the surface 804a during a period within which the automatic tool interchanging device 862 is changing the rough machining tool to a finish machining tool 8l2, to form a plurality of circumferentially spaced, radially extending quality-changed layers 835a, 835b ... similar to the quality-changed layer 35 described in connection with Fig. 4. After the formation of the quality-changed layers 835a, 835b ..., the surface 804a is machined by the finish machining tool 8l2. The chips formed during the finish machining are broken at the quality-changed layers 835a, 835b ... thereby effectively preventing the chips from twining themselves around the cutting tool 8l2.

Although the ninth embodiment shown in Fig. l5 has been described as having the quality-changed layers 835a, 835b ... extending radially, a quality-changed layer in the form of spiral as is the case with the eighth embodiment of Fig. l4 may be formed in the surface 804a of the work 804.

It should be understood that it is possible to apply either one of the embodiments shown in Figs. 7 through l2 to the ninth embodiment shown in Fig. l5.

Fig. l6 shows a chip breaker system according to a tenth embodiment of the present invention wherein a laser beam from a single laser oscillator is irradiated to a work supported by at least one of a plurality of cutting apparatuses. The system comprises a single laser oscillator 92l similar to that 2l shown in Figs. l through 3, and a plurality of (four in the illustrated embodiment) cutting apparatuses 942, 943, 944 and 945 such as the lathe shown in Figs. l through 3, the turning center shown in Fig. l3 and/or the machining center shown in Fig. l5. Four laser guides 946, 947, 948 and 949, with one associated with each cutting apparatus 942, 943, 944, 945, are arranged between the respective cutting apparatuses and the laser oscillator 921. Reflecting mirrors 951 and 954 are fixedly mounted within the laser guides 946 and 949, respectively. Half-mirrors 952 and 953 are fixedly mounted within the laser guides 947 and 948, respectively. A pair of reflecting mirrors 957 and 958 placed one upon the other and oriented at an angle of 90° to each other are vertically movably arranged within a common laser guide 956. When the refecting mirror 957 is positioned in the laser path from the laser oscillator 921, the reflecting mirror 957 reflects the laser beam 922 from the laser oscillator 921 toward the mirrors 952 and 951. When the reflecting mirror 958 is positioned in the laser path from the laser oscillator 921, the reflecting mirror 958 reflects the laser beam 922 from the laser oscillator 921 toward the mirrors 953 and 954. A total reflection mirror 961 is arranged between the reflecting mirror 951 and the cutting apparatus 942, for movement between a position where the mirror 961 is in the laser path from the reflecting mirror 951 to totally reflect the laser beam from the reflecting mirror 951 and a position where the mirror 961 is out of the laser path from the reflecting mirror 951 to allow the laser beam 922 from the reflecting mirror 951 to be irradiated to the work mounted on the cutting apparatus 942. Similarly, total reflection mirrors 962, 963 and 964 are respectively arranged between the half-mirror 952 and the cutting apparatus 943, between the half-mirror 953 and the cutting apparatus 944, and between the total reflection mirror 954 and the cutting apparatus 945. When it is desired to irradiate the laser beam to the work mounted on the cutting apparatus 942, the pair of reflecting mirrors 957 and 958 within the common laser guide 956 are vertically moved to locate the reflecting mirror 957 in the laser path from the laser oscillator 921. The total mirror 961 is moved to the position out of the laser path from the reflecting mirror 951, and the remaining total reflection mirrors 962, 963 and 964 are moved in the laser paths from the respective reflecting mirrors 952, 953 and 954. Then, the laser beam 922 from the laser oscillator 921 is reflected by the total reflection mirror 957 and is directed to the half-mirror 952 and the reflecting mirror 951. A portion of the laser beam 922 from the total reflection mirror 957 is directed to the reflecting mirror 951 through the half-mirror 952, and the remaining laser beam is directed to the total reflection mirror 962 and is totally reflected thereby. The laser beam 922 directed to the reflecting mirror 951 is reflected thereby and is irradiated to the work mounted on the cutting apparatus 942, so that at least one quality-changed layer is formed in the surface to be machined of the work in the manner as described with reference to Fig. 4.

As will be seen from the foregoing description, the laser beam 922 can be directed to the cutting apparatuses 942 and/or 943, or 944 and/or 945 by appropriately operating the reflecting mirrors 957 and 958 and the total reflection mirrors 961 to 964.

The tenth embodiment shown in Fig. l6 can carry out the treatment of the chips in the plurality of cutting apparatuses 942 to 945 by the single laser oscillator 921, and is particularly suitable for use in the Flexible Manufacturing System or the Factory Automation.

Although the first to tenth embodiments of the present invention illustrated in the accompanying drawings have been described as utilizing the laser beam, it will be appreciated by one skilled in the art that an electron beam can be substituted for the laser beam. It should also be understood that the combination of the Young laser oscillator and the optical fiber bundle in the fifth embodiment shown in Fig. 9 can be substituted for the combination of the laser oscillator and the laser guides shown in the first to fourth embodiments and in the sixth to tenth embodiments.

As described above, according to the present invention, since the thin chips formed during the machining of a work, in particular, during the final finish machining of a work, can automatically be broken, it is positively prevented that the chips twine themselves around the cutting tool or jigs. Therefore, it is made possible to enhance the efficiency of machining while an unattended operation of a factory is achieved, and the Flexible Manufacturing System and the Factory Automation can be realized in the machining of not only cast products but also works made of mild steel, alloy steels or the like. The formation of the quality-changed layer or layers by means of the beam in accordance with the present invention may, of course, be done prior to the rough machining of the work depending upon the material of the work to break the chips formed during the rough machining. Additionally, it is preferable that the formation of at least one quality-changed layer by the beam is effected automatically during the period within which the rough machining tool is changed to a finish machining tool. In this case, the loss of machine operation time can be made to the minimum, while the condition of the irradiation of the beam can be periodically inspected.

**Claims**

I. A method of breaking chips, comprising the steps of:

preparing a work having a surface to be machined;

irradiating a beam to the work to heat a portion of said surface, to thereby form in said surface a quality-changed layer different in composition from the adjacent portions of said surface; and

machining said surface by a cutting tool to permit chips formed by the machining to be broken at said quality-changed layer.

2. A method as defined in claim I, including the step of:

moving said beam so as to cross a path of movement of the cutting tool relative to said surface, to form at least one elongated quality-changed layer in said surface.

3. A method as defined in claim I, including the step of:

moving said beam so as to cross a path of movement of the cutting tool relative to said surface, to form a plurality of spaced, elongated quality-changed layers in said surface.

4. A method as defined in claim 2, wherein said surface to be machined is a cylindrical surface, and said quality-changed layer extends substantially in parallel to a central axis of said cylindrical surface.

5. A method as defined in claim 2, wherein said surface to be machined is a cylindrical surface, and said quality-changed layer extends helically around a central axis of said cylindrical surface.

6. A method as defined in claim 2, wherein said surface to be machined is a planar surface, and said quality-changed layer extends straight forwardly from a central region of said planar surface toward a periphery thereof.

7. A method as defined in claim 2, wherein said surface to be machined is a planar surface, and said quality-changed layer extends spirally from a central region of said planar surface toward a periphery thereof.

8. A method as defined in claim I, wherein said quality-changed layer is formed of a quenched and hardened layer.

9. A method as defined in claim I, including the step of:

after the heating of the portion of said surface by said beam, applying a cooling medium to the heated portion to quench and harden said heated portion, to thereby form said quality-changed layer.

I0. A method as defined in claim 9, wherein said cooling medium is a cutting oil.

II. A method as defined in claim I, including the step of:

applying an air jet to the portion to be heated of said surface, to clean said portion to be heated.

I2. A method as defined in claim I, including the step of:

prior to the irradiation of said beam, depositing a material onto the portion to be heated of said surface, said material having a property tending to absorb said beam.

I3. A method as defined in claim I2, including the steps of:

depositing a mixture in which carbon powder is dissolved in a thermosetting resin, onto said portion to be heated of said surface; and drying said mixture by hot gas flow.

I4. A method as defined in claim I or claim I2, including the step of: preheating the portion to be heated of said surface, prior to the irradiation of said beam to said work.

# FIG. 1

0 220 421

# FIG. 2

X-AXIS

←→ Z-AXIS

0 220 421

# FIG. 3

X-AXIS

# FIG. 4

# FIG. 5

35
36
g₅ f 4b 4
4c g₄ 12 4d
g₃ 11 4a
g₂
g₁

# FIG. 6

135
4c 4b 4 4a

# FIG. 7

32 246 CUTTING OIL RESERVOIR
34 243 242
35 241
22
4c 4b 4a 4

# FIG. 8

COMPRESSOR

34

332
22
341
344
345
4b

343

342

344

346

4

# FIG. 9

447

RESERVOIR

421

LASER
OSCILLATOR

444

441

451

448

BLOWER

491

442

449   453

X

X

22

4b

4

443   446

# FIG. 10

444

442

443   441

FIG. 11

541    32    544    543

542    545    34    548    551    549

546    BLOWER

XII    XII

4b    547    22    551    4

FIG. 12

542

546    541

547    548

FIG. 14

735

604

604a

FIG. 13

653b    652    691    651    650

652b    653a

652a

604    612    692

604a    621

635c    654

635b    655

635a    626

656    632

## FIG. 15

## FIG. 16